# EUROPEAN PATENT APPLICATION

(11) **EP 1 892 902 A2**
(43) Date of publication of application: **27.02.2008**
(21) Application number: 07114159.2
(22) Date of filing: 10.08.2007
(51) Int. Cl.: H04L 12/56, H04L 25/14

(54) **Technology for rate adaptation in a multi-line data transmission system**

(30) Priority: 20.08.2006 IL 17757606
(71) Applicant: ECI Telecom Ltd., 49 130 Petach Tikva (IL)
(72) Inventor: Matza, Avi, 74073, Nes-Ziona (IL)
(74) Representative: Modiano, Micaela Nadia

(57) **Abstract**

A method is described for rate adaptation in a telecommunication system comprising a group of bonded transmission links carrying together a binary traffic stream, wherein each of the bonded links is adapted to carry a sub-stream of binary information allocated in a number of bins. In case of changing conditions in at least one bin of at least one bonded link among the group, bit re-allocation is performed between different bonded links in the group, thereby adapting rate in one or more of the bonded transmission links to the current conditions.

## Description

### Field of the invention

The invention relates to a technology of adaptation rates of multiple data streams transmitted via a multi-line configuration of a telecommunication system.

### Background of the invention

The related prior art refers to telecommunication systems that comprise a group of communication links (so-called bonded links) used together for transmitting quite heavy data traffic. Bonding of communications links or paths into a higher-bandwidth, logical communications path is widely used, and a problem of bandwidth allocation or rate adaptation between the communication links in such systems is being discussed in the related art.
Various solutions for policing data traffic are known in the art.

US published patent application US 2004 /0218530 A1 describes a system and a method for transmitting data streams subject to crosstalk. An adjustable parameter, preferably data rate, is adjusted using feedback of performance characteristics (for example signal-to-noise ratio (SNR) and line attenuation) for maximizing total throughput of the data streams. The system comprises a) a plurality of communication links, wherein each communication link has a respective performance characteristic and at least one communication link has an adjustable parameter; (b) a mechanism for measuring the performance characteristics; and, (c) a mechanism for adjusting the mentioned adjustable parameter in response to the mechanism for measuring the performance characteristics. The solution is applicable to inverse multiplex (IMUX) systems, where total throughput is more important than the throughput of any individual data stream.
When the problem is not achieving the maximal throughput via the plurality of communication lines, but distributing traffic in case of a faulty or a degrading condition of a particular line, solutions may differ from the above-mentioned one.

An ITU-T standard recommendation G.992.3 suggests a mechanism of rate adaptation to be used in xDSL (Digital Subscriber Line) technologies, which is suitable for so-called DMT (discreet multi tone) technologies. The mechanism is intended for relocating traffic bits originally located in a particular bin of a DSL line (where a bin is a spectral slice typically of 4.3125 khz), to other bins of this same line, say, due to Signal to Noise Ratio degradation in the particular bin of the line. In general, the mechanism comprises procedures for OLR (On Line Reconfiguration), and in particular - a method of SRA (Seamless Rate Adaptation), and these procedures are defined in G.993.2 chapter 9.4 (management procedures) in subclause 9.4.1.1 "On line reconfiguration command". The Seamless Rate Adaptation (SRA) mechanism is used to reconfigure the total data rate ( in a single line ) (ΣLp) by modifying the frame multiplexor control parameters (Lp) and modifications to the bit and fine gain (bᵢ, gᵢ) parameters, wherein b; indicates the number of bits allocated in bin (i) on a specific line, gᵢ indicates the gain applied to bin (i).

Two additional relevant mechanisms are described in the same standard recommendation G.992.3, one is a DRR (Dynamic Rate Repartitioning) mechanism, and the other as a Bit Swap mechanism.
It should be emphasized that the OLR mechanism recommended in ITU-T G992.3 is designed and applicable to changing bit allocation between different bins in a single DSL line.

To the best of the Applicant's knowledge, no adequate technology has been described by now which would be suitable for fine grain re-allocation (redistribution) of traffic information between multiple bonded transmission lines.

### Object and summary of the invention

It is therefore the object of the present invention to provide a new technique of rate adaptation in a telecommunication system comprising multiple bonded transmission lines, the technique being such to allow fine granularity relocation (redistribution) of traffic load between these multiple transmission lines.

The above object can be achieved by providing a method for rate adaptation in a telecommunication system comprising a group of bonded transmission links including at least a first link and a second link for carrying together a binary traffic stream, wherein each of said bonded transmission links is adapted to carry binary information allocated in a number of bins; the method comprises transmission of the binary traffic stream via the group af bonded transmission links and performing bit re-allocation (i.e., reallocation with the granularity of a single bit) between different bonded transmission links of said group in case of change of one or more conditions in one or more bins of at least one bonded transmission link in said group.

Speaking more specifically, each of said bonded links is adapted to carry a sub-stream of binary information in a number of bins, wherein the sub-stream is part of said traffic stream;
the transmission comprises transmitting a first sub-stream of binary information via the first transmission link , while allocating said first sub-stream in one or more of bins of the first transmission link so that each bit of the first sub-stream is allocated in a specific bin of said first link;
the bit re-allocation is by allocating one or more bits of information, previously allocated in a bin of said first link , into a bin of the second transmission link , thereby adapting rate in one or more of said bonded transmission links to current conditions of said one or more links.

The mentioned conditions may constitute one or more of the following predetermined conditions selected from a non-exhaustive list comprising: transmission conditions such as Signal to Noise Ratio SNR affecting capacity of the link in one or more specific bandwidth slices (bins), link conditions such as dispersion etc., up to a fault of the link, time factor - for example, expiration of a predetermined time limit, user's instructions/requirements - for example, such as ceasing transmission via the link, reserving one or more bits in one or more bins in the link to be used in case of a fault in other bonded links, etc.

The method may further comprise an additional step of allocating information previously located in one bin of the first link, into another bin of the same first transmission link.

In other words, the method allows bits allocation transfer between bins being carried by different bonded transmission links, whenever the conditions change at least in one of the links in the group. Yet in other words, the proposed method comprises shifting bits from one link to another link in the group of multiple bonded links. Since the minimal granularity of the allocation transfer is a single bit, the method enables performing a really seamless and dynamic rate adaptation (redistribution) between different bonded transmission links and their bins.

Preferably, the bonded links are wire-line transmission links adapted to carry communication traffic according to DMT (Discreet Multi Tone) technology: such as links of DSL, ADSL, ADSL2, ADSL2plus, VDSL1, VDSL2, and the like.

However, Embodiments of the present invention can be applied not only to bonded different physical links (e.g., xDSL over twisted pairs), but also to "bonded" different channels on the same physical line, or even different channels or frequencies in a wireless communications network.

The discussed bonded transmission links should be understood as communication links provisioned in the telecommunication system and currently available for transmitting the traffic stream there through by at least partially utilizing their capacity (or bandwidth).

It should be understood that in a specific link of the group, some bandwidth slices (bins) may be idle - and thus the bandwidth and the capacity of the link is used partially. Idle bins can be reserved for further use.

It should also be noted that that if some bins in the link are not fully packed with information bits, both the bin and the link capacity are not fully utilized. In the case when a bin is used not fully, its remaining capacity can be reserved (the bin thus becomes partially reserved) and then utilized.

For carrying the mentioned traffic stream, the bonded transmission links should be currently operable in the same direction of transmission from a transmitting end to a receiving end, thus enabling the bit allocation transfer there-between and further merger of the sub-streams at a receiving end of the bonded links.

It goes without saying that each of the links may be a bi-directional link, i.e., be capable of transmitting information also in the opposite direction. It is also understood that during a different time period a specific bonded link may be used as a link transmitting traffic in the opposite direction only.

Moreover, at least part of the bandwidth available on a provisioned bonded link may be selectively used for traffic transmission in one or another direction, as required (i.e. bandwidth which, regularly or conventionally, is not used). It is suggested that such bandwidth be used for the proposed bit re-allocation, for example with preliminarily reserving the mentioned "non-conventional" bandwidth.

The communication system is preferably a DMT system where, on each of the bonded links, the information is separated across the bins being relatively narrow frequency channels (or bit rate channels): for example, 256 downstream or 32 upstream possible bins, with 4.3125 kHz spacing between the adjacent bins. For example, bin 64 is a narrow channel at 276 kHz.
Another example could be: 2098 bins allocated with the spectrum spacing of 8.625 kHz.

The change of predetermined conditions in one of the links may, for example, mean that transmission conditions in that link either decrease or improve. It may also mean that the link has just failed, has been switched off by an outside command or - to the opposite- has been provided with additional bandwidth/capacity according to any internal or external reasons.

Therefore, the operation of shifting bits from the bin(s) of the first link (or more bonded links) to the bin(s) of the second link (or more bonded links) is performed to effectively use bandwidth and capacity of the bonded transmission links.

In view of the above, said second transmission link may be the link where said conditions have changed in the meaning that its bandwidth/capacity has increased (for example its transmission conditions have improved).

Alternatively, or in addition, the first transmission link may be the link where said conditions have changed in the meaning that its bandwidth/capacity has decreased (for example, its transmission conditions have deteriorated).

There may even be a case when one or more conditions change in a transmission link of the group, being neither the first link nor the second link; however, as a result of such change of conditions, the first and the second links may participate in relocation of traffic bits.

Change in conditions may manifest themselves, for example, by a change in one or more predetermined measured/monitored parameters, for example by expiring a specific time limit detected by a timer, a change of a signal to noise ratio (SNR) in a specific link or in a particular bin of the specific link, etc.

The method should preferably comprise a step of monitoring, in real time, said predetermined conditions, including the transmission conditions and the link conditions of said multiple bonded transmission links.

The predetermined transmission conditions and link conditions can be monitored by continuously or periodically measuring said one or more parameters in a number of bins of the bonded links (preferably, in every bin of every one of said links), followed by reporting a value of the one or more parameters, or a change of said one or more parameters in comparison with respective predetermined reference values.

According to one version of the method, the step of monitoring the conditions of interest should be provided in such a manner as to ensure synchronized reporting concerning every one of said bonded links, and when applicable - concerning at least a number of bins (if not every bin) of said bonded links, to synchronize the allocating step.

The next step would be to actually change a current specific bit-to-bin relationship by reallocating one or more bits between at least two of the transmission links, based on the above reported information.

According to another version of the proposed method, it preferably comprises:
- preliminarily reserving bandwidth in at least one link among said bonded transmission links, by at least partially reserving one or more selected bins in said at least one link, and,
- in case of degradation of predetermined conditions in one or more other links of said bonded transmission links, using said at least partially reserved bins for transferring to them allocation of the traffic information from bins of said one or more degraded transmission links.

It should be kept in mind that at least partially reserving of a bin can be provided: either by not allocating traffic information in a particular bin (fully reserved bin), or by allocating traffic information in the bin using only part of the bin's capacity ( partially reserved bin), or by freeing at least partially some selected bin or bins.

In this second version, the main purpose of the monitoring is to learn whether some predetermined conditions have degraded drastically (say, an alarm of a fiber cut is received). In the absence of such events, the rate adaptation is based on monitoring/reporting conditions in bins of the bonded lines.

In view of the explanation concerning changes of predetermined conditions, presented in the present description, degradation of such conditions in a bonded link may include failure or degradation of the link, deterioration of its transmission conditions fully or in a number of bins, decrease of its bandwidth due to any internal or external reasons such as switching it off, etc.

The above-mentioned version of the invention can be further used for protecting traffic information transmitted via one or more of the bonded transmission links, preliminarily agreed to be protected, wherein
said one or more links, where the bandwidth and/or capacity is preliminarily reserved by at least partially reserving one or more bins, constitute protecting links, and wherein
in case of degradation of the predetermined conditions in said one or more links to be protected, said at least partially reserved bins are used for transferring to them allocation of the traffic information from said one or more degraded links to be protected, thereby compensating bandwidth and/or capacity lost in said links.

The reserving can be performed using either a "1:1" protection principle (one protecting link to one protected link) or a "1:n" protection principle (one protecting link to "n" protected links - so called shared protection).

The proposed method will enable a finer protection granularity than that available in the presently known systems, since the user may allocate resources for protection in a per bit resolution and thus to achieve the really seamless and dynamic rate adaptation.

The method preferably comprises modifying the mechanism of On Line Reconfiguration (OLR) known for xDSL systems and described in ITU-T G.992.3, and utilizing the OLR mechanism for performing transfer of bit allocation between different links of DMT bonded transmission links.

In a specific case, the method comprises modifying the Seamless Rate Adaptation (SRA) mechanism.

Preferably, the method may comprise the following steps for utilizing and modifying the known OLR (say, SRA) algorithm to shift bit allocations between different bonded transmission links:
providing a common OLR (say, SRA) modified software unit for serving the group of bonded transmission links, and registering in the common modified OLR unit initial bit allocation values and initial said conditions of all the bins of all the links in a common list (in the common list, each bin may have its individual number different from numbers of other bins);
ensuring updating the modified OLR software unit about changes in said conditions including link conditions, time factor, users instructions, transmission conditions in at least some selected bins of at least some selected links in the group, performing logical re-allocation of bits within said list by the common OLR software unit;
based on the logical re-allocation, performing real re-allocation of bits between different bonded links.

The selected bins should be understood as those selected, for any reasons, to be monitored; for example, these bins may be considered critical for bit allocation from the point of conditions' changes, considered most exposed to the condition's changes, etc.

Of course, it is better to perform the monitoring and updating the modified OLR unit about conditions in all bins of all the links; however, the updating can be performed at least concerning those bins where one or more of the predetermined conditions change essentially in comparison with predetermined reference value(s).

Another version of the method may comprise providing a modified OLR (say, SRA) software unit per at least two bonded links of the bonded group, wherein the modified OLR unit registers all the bins of said at least two links in a combined list;
the group is thereby served by a number of the modified OLR software units, wherein the number of the OLR units being smaller than the quantity of the bonded links in the group. In such a manner, the bit-reallocation are performed, for example, between a pair of bonded links which are preliminarily assigned to protect each other

Alternatively, the method may comprise:
- providing a modified OLR software unit per each of said links;
- providing a centralized control unit CCU for said modified OLR software units;
- accumulating in said centralized control unit CCU actual information ( i.e., updating the CCU) about changes in said conditions( for example: alarms on a link conditions, transmission conditions in a link, timers, users instructions, transmission conditions in bins) and processing the information to obtain a list of at least selected so-called perspective bins of all of said links, where either the predetermined conditions have improved or one or more bit allocations have been reserved,
- enabling bi-directional communication between said CCU and each of said modified OLR software units,
- selectively providing said information from the centralized control unit CCU to one or more of said OLR software units;
- enabling each said modified OLR software unit associated with a particular transmission link to receive from the CCU and process said information about the perspective bins as information about additional (fictitious) bins of said particular transmission link ;
- in case of deciding, by any of said modified OLR software units, to re-allocate one or more bits to said additional bins, informing said centralized control unit CCU for performing the re-allocation operation into real suitable said perspective bins of one or more other bonded transmission links,
- performing re-allocation in the traffic stream under control of said CCU and based on information collected from said bonded links.

Preferably, the CCU should obtain not only the information about the perspective bins, but also about so-called non-perspective bins where either the predetermined conditions have deteriorated or the reserved one or more bit allocations have been used.

The information about the non-perspective bins may be used for selecting, at the CCU, to which links and about which perspective bins the information from the CCU should be sent.

According to a second aspect of the invention, there is proposed a computerized system for rate adaptation in a traffic stream (preferably a DMT technology stream) whenever transmitted on a group of bonded transmission links by allocating traffic bits in a plurality of bins on each of said links; the system is capable of performing bit re-allocation between different links of the group in case of a change of one or more conditions in one or more bins of at least one link in said group.

The system may comprise:
one or more monitoring means, wherein each of said monitoring means being capable of monitoring one or more predetermined conditions in a specific link of said bonded transmission links, the one or more monitoring means being in communication with a centralized conditions' monitoring and control unit CMCU
capable of:
   storing and updating data about bit allocations in the bins of said bonded transmission links,
   collecting information from said monitoring means on said predetermined monitored conditions in said transmission links;
   determining changes in the monitored conditions based on the collected information,
   making decisions about transferring bit allocations between different said transmission links based on the determined changes of said conditions and using the data at least about one specific bin to which one or more bits can be allocated,
   controlling bit re-allocation between different said bonded transmission links according to the decision;
   the system also comprising a Bandwidth (rate) adaptation block BAB for performing said bit re-allocation under control of the CMCU.

The monitoring means preferably monitor at least selected bins of said bonded transmission links and feed to the CMCU the suitable information.

The above-mentioned stored and updated data about bit allocations can be, for example, information about at least partially reserved bins i.e., about preliminarily reserved "bit places" in one or more bins of one or more said links.

Preferably, the CCU should be capable to store and update both the data about bit allocations in all bins of all said bonded links of the group, and the information about the conditions in all bins of all the links. In this case the monitoring means should be operative to perform massive or total per bin monitoring, and also the synchronized reporting of the monitored data to the CMCU.

The system preferably comprises at least one modified OLR software unit in the CMCU, the OLR being capable of receiving and processing information about said conditions in bins of different bonded transmission links, and capable of making decisions of transferring bit allocations between bins of said different transmission links.

The invention will be described in more details as the description proceeds.

There is also provided a software product comprising computer implementable instructions and/or data for carrying out the method described above. The software product preferably comprises computer implementable instructions of a modified OLR mechanism (say, a modified SRA algorithm). Further, there is provided a carrier medium accommodating the software product.

### Brief description of the drawings

The invention will further be described with reference to the following nonlimiting drawings, in which:
**Fig. 1a (prior art)** schematically illustrates an exemplary graph of a Signal to Noise Ratio distribution for a sequence of bins of ADSL2 transmission line.
**Fig. 1b (prior art)** schematically shows another exemplary graph of an SNR distribution for a sequence of bins in a VDSL transmission line.
**Figs. 2a, 2b (prior art)** are schematic block diagrams illustrating DMT bonded transmission links, where each of the links is adapted to have a number of bins in which traffic portions are allocated, and where rate adaptation is performed per link, within the bandwidth available in the link.
**Figs. 3a, 3b** are block diagrams of the bonded transmission links, schematically illustrating how the rate adaptation can be performed between different transmission links, according to the invention.
**Figs. 4a and 4b** are schematic block diagrams illustrating two exemplary embodiments of a monitoring and control system operative to perform the proposed inventive method.

### Detailed description of preferred embodiments

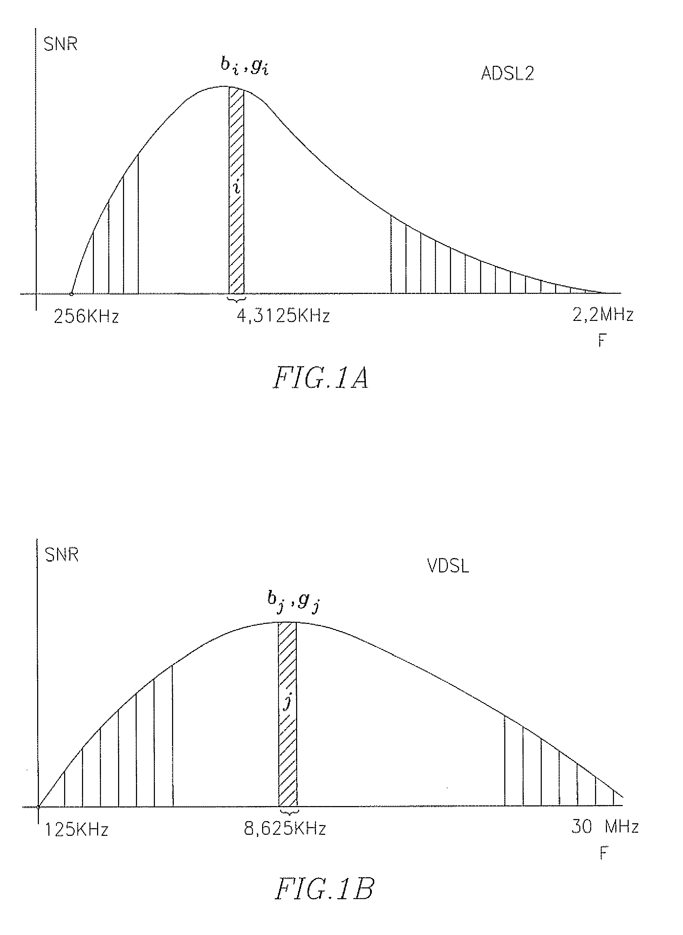

**Fig. 1a (prior art)** shows how bandwidth of an DMT , for example ADSL (Asymmetric Digital Subscriber Loop) transmission line can be divided into narrow spectrum slices (bins). ADSL bandwidth comprises 256 downstream bins with spacing of 4.3125 kHz there-between. Each bin of the operating transmission line is characterized by its current Signal to Noise Ratio (SNR). The SNR value of a particular bin "i" is directly proportional to the number of information bits Bi which can be successfully transmitted in that particular bin. The number of bits Bi depends on some additional parameters, for example on a value of a specific fine gain gi which can be reached for this specific bin.
**Fig. 1b (prior art)** illustrates an exemplary graph of a VDSL (Very High frequency Digital Subscriber Loop) transmission line, where the total bandwidth spectrum is much broader and a specific bin can be also wider.
It is understood, that conditions in the line (of Fig. 1a, or of Fig. 1b) may change, the curve may therefore acquire another shape, and the number of bits Bi (Bj) which can be safely transmitted in each specific bin may also change. In order to transmit the required amount of data via the line, bits may be re-distributed between bins of the line when conditions of the line (and/or of the transmission) change. One of the known methods for coping with that - On Line Reconfiguration (OLR), and one of its particular versions -Seamless Rate Adaptation (SRA) - have been mentioend in the background of the invention.

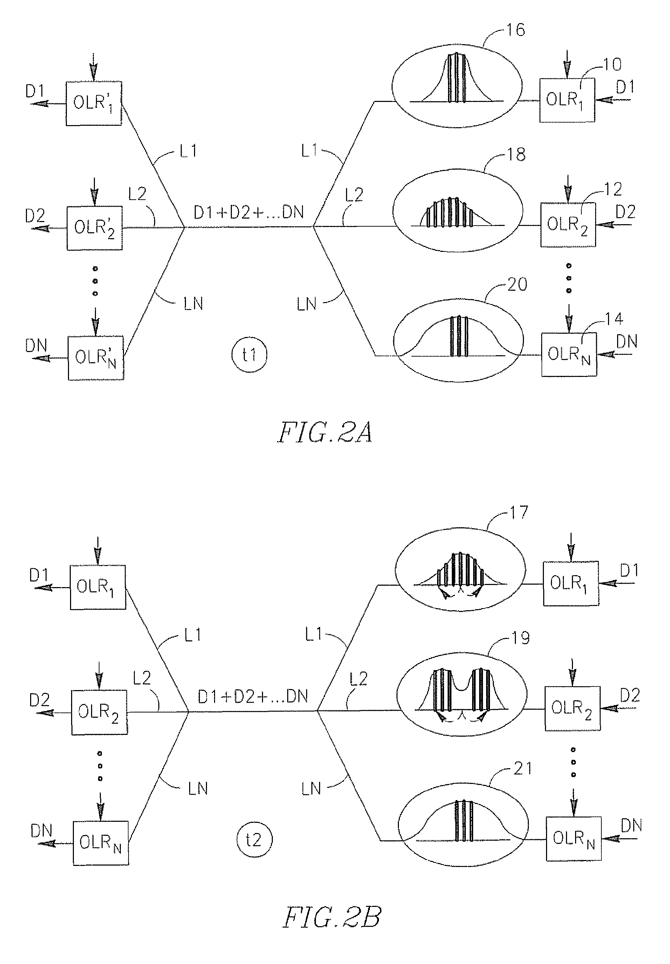

**Figs. 2a and 2b (prior art)** illustrate the known principle of bit rate adaptation in bonded transmission lines. Fig. 2a illustrates the links and the initial schematic allocation of bits between bins in each of the links (by the moment of time t1). Fig. 2b illustrates results of re-allocation of bits after some conditions in the bonded links have changed by time moment t2. For example, each of the three illustrated links: L1, L2 and LN are ADSL bonded links. In each of them, control of bit allocation in different bins is performed separately from the other link, with the aid of a specific associated Bit Allocation Block which is schematically shown as a block 10 (12, 14) switched in the link. In this example, these blocks are marked as OLRᵢ , to indicate that the bit allocation procedure is performed according to the known OLR method.
It is quite understood that the links are usually bi-directional.
For one specific direction (say, the west-east direction) each of the links (say, link 1) transmits its specific traffic stream having a predetermined specific bit rate (D1). The link is provided with a separate bit allocation block at the transmitting end (for example, block OLR1) which performs bit allocation to different bins in view of conditions in the link and changes of these conditions. In the links L1, L2, LN, schematic spectrum diagrams 16, 18 and 20 (similar to that shown in Fig. 1a) respectively show how initial allocation of bits is performed according to initial conditions in the links. Black columns in each of the diagrams 16, 18, 20 show specific bins where transmission bits are allocated.
Each link usually comprises an operational embedded channel which is used for transmitting to the receiving end information about the performed bit allocations in the link, including the time of its changes if any. All of the bonded links pass a section of transmission Lg where they are considered a bonded group. At the receiving end, a second bit allocation block (in our example, marked OLR1') receives the necessary information concerning bit allocations and outputs the traffic stream with the same bit rate D1. The block OLR1' will perform the function of bit allocation when the traffic is transmitted in the east-west direction over the link L1.
**Fig. 2b** illustrates how conditions in the links may change with time, and which changes in bit allocations may be caused by the condition changes in each of the links. Schematic spectral diagrams 17, 19 and 21 show that, by the time moment t2, transmission conditions in different bins in links L1 and L2 have changed, while in link LN they remain the same. The diagrams 17, 19 illustrate that the bit re-allocation in links L1, L2 is performed within the bandwidth currently available in each specific link.
Note that the bit rates in the links respectively remain the same, namely: D1, D2 and DN.

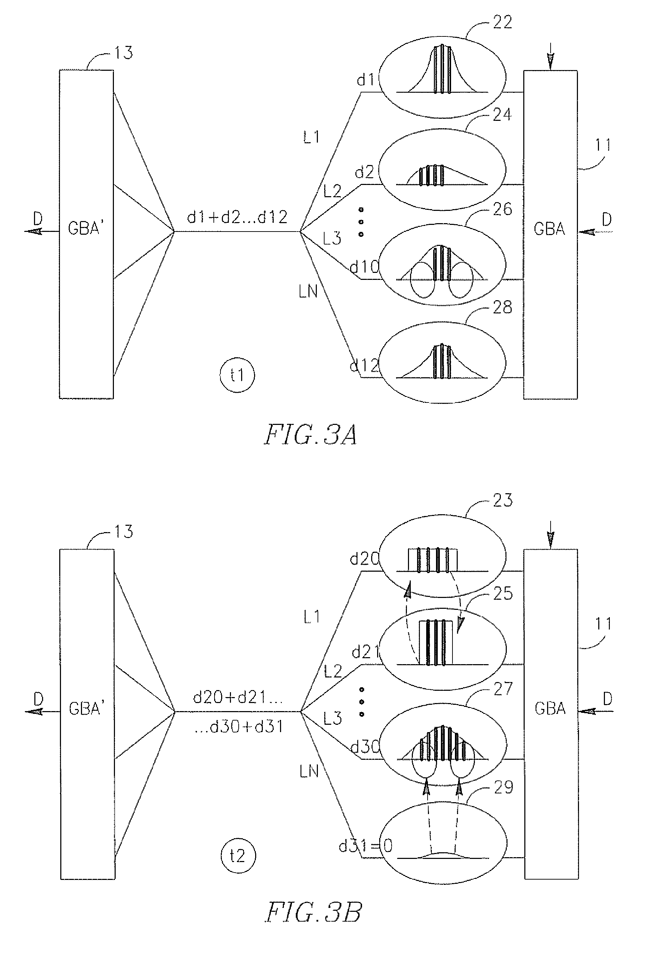

**Figs. 3a and 3b** schematically illustrate a group of bonded links (say, of DMT technology), where rate adaptation is performed on the level of the group, i.e. in such a manner that bit rate in each of the bonded links does not have to remain constant, while the total bit rate of the resulting traffic stream remains constant. Indeed, in Fig. 3a bit rates in link L1 and link L2 are respectively d1 and d2 ..., while the total bit rate of the bonded group is D = (D1+d2+...d10+d12). The new proposed method of bit rate adaptation is performed by schematically shown blocks 11 and 13, called blocks of Group Bandwidth Allocation (GBA).
Spectral diagrams 22, 24, 26 and 28 schematically show initial distribution of bits between bins in the respective transmission links L1, L2, L3... LN (i.e., for conditions at the time period t1).
**In Fig. 3b** (upon some changes, say, in transmission conditions in links L1, L2 and link LN) the bit rates in these links become respectively d20, d21, d30 and d31(=0) while the total bit rate of the traffic stream remains equal to D.
Let in links L1 and L2 transmission conditions have changed so that, for a time moment t2, SNR has become maximal for bins which were not the best for transmitting traffic bits during time period t1, and vise versa.
The traffic bits may be re-allocated between different links, and it is schematically shown by dotted arrows between spectral diagrams 23 and 25.
The present application proposes performing the described rate adaptation by controlling bit allocation in the group, for example, by monitoring predetermined conditions in each bin of each of the bonded links and re-allocating bits freely between different links of the bonded group. Of course, signaling about changes in the bit allocations, and synchronization marks are to be ensured and introduced in a kind of an embedded operational channel in each of the links.
In Figs 3a and 3b, the bit allocation control function is assumed to be performed by the two blocks GBA 11 and 13, being common for the group of bonded links and being respectively placed at the transmitting end and at the receiving end of the bonded links group.
**Figs. 3 (a, b)** may also illustrate how the proposed invention can be utilized for traffic protection in a group of bonded transmission links,
In one specific case, traffic via one of the transmission links may be "protected" by another transmission link.

For example, if link L3 is agreed to be a protecting link to link LN, and link LN suddenly fails, link L3 should be capable to undertake the whole traffic of link LN ( say, d31=0, and d30 = d10+d12). For this purpose, at least some "space" in bins of link L3 may be reserved and run idle while link LN still operates. In link L3, some of the bins of the available bandwidth are shown reserved (marked by two circles in the spectral diagrams). The block GBA 11, whenever receives data about failure of link LN, should be prepared for that and should re-allocate the binary information from all bins of link LN, where it was previously allocated, to the reserved spaces in bins of link L3. Fig. 3b shows that bits previously allocated in link LN, are transferred to these reserved bins of the link L3.
It should be noted that the bins must not be allocated /reserved completely, both the allocation and the reserving can be provided with the minimal granularity of one specific bit.
Neither monitoring of predetermined conditions (transmission conditions, link conditions, user commands, timers), nor receiving any alarms is shown in Figs 3a and 3b. Only schematic upper arrows at the blocks 11 and 13 symbolize that the monitoring and the updating are performed.

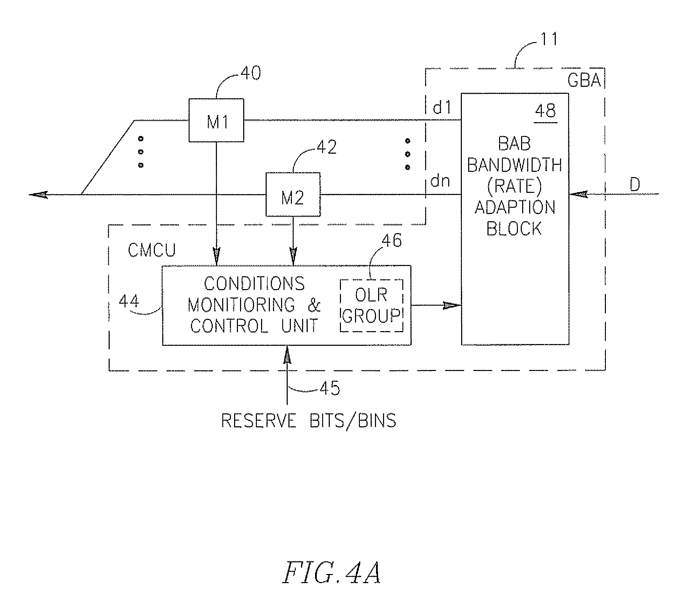

**Fig. 4a** illustrates an exemplary simplified structure of the block GBA 11 (13) shown in Figs 3a and 3b. In order to perform free bit re-allocation between different links of the group of bonded transmission links (say, of the DMT technology), the Inventor proposes monitoring the link and the transmission conditions, and other conditions which are planned to be taken into account, in at least some selected bins of the transmission links. Preferably, the transmission conditions are monitored in each bin and in each link of the bonded group. The monitoring function is performed by a number of monitoring means M1, M2..., respectively associated with different bonded links. Two of the monitoring means are shown in Fig. 4a and marked 40 and 42. The monitoring means are in communication with a Conditions Monitoring and Control unit CMCU (44). In one embodiment, the CMCU 44 stores information about previous state of all bins in all of the bonded links from the point of the predetermined conditions. The CMCU 44 is also informed if any bins or parts of them are to be reserved, or if any of the reserved bins can be used (see arrow 45). Using the monitoring means, the CMCU 44 unit updates its information about the monitored bins of different transmission links and reports the complete updated information to its internal block 46 of modified software OLR, which may constitute a modified SRA software module. The SRA module "perceives" the received information like it was information about one "combined" fictitious link having numerous fictitious bins, and then performs logical re-allocation of bits between these bins. Actually, the SRA module 46 may store information about the previous state of all bins of the bonded links, and CMCU 44 only reports its new findings from the monitoring means to the SRA module 46. A result of the logical bit allocation performed in the modified OLR software is then used for controlling a Bandwidth (or rate) adaptation block 48 (BAB), which performs the real rate adaptation, when dividing the data stream D into sub-streams d1, d2, ....dn.

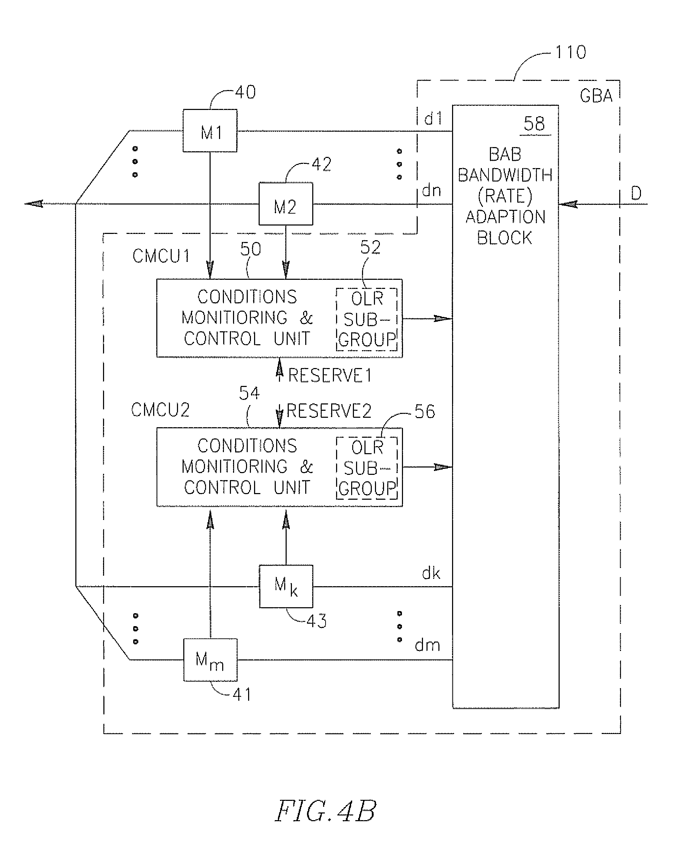

**Fig. 4b** illustrates another embodiment of the rate adaptation system for bonded transmission links. In this embodiment, the Group Bandwidth Adaptation block GBA 110 comprises more than one CMCU units (CMCU1 unit 50 and the CMCU2 unit 54 are shown), all in communication with the Bandwidth Adaptation Block BAB 58. Each of the CMCU units is responsible for a sub-group of bonded links ( two subgroups are indicated, comprising links with rates d1... dn and dk ... dm). Each of the CMCU units collects information from a number of monitoring means in its sub-group and, based on that information, performs logical re-allocation of bits within the sub-group using its associated OLR modified software block. Real bandwidth (rate) adaptation is performed by the block BAB 58, when collecting data from all sub-group CMCUs (in this example, from blocks 50 and 54).
The proposed embodiment can be effectively used for traffic protection in the group of bonded links.

It should be appreciated that other embodiments of the system and other versions of the method could be proposed for implementation of the inventive concept; such modifications are to be considered part of the invention being generally defined by the claims that follow.

## Claims

1. A method for rate adaptation in a telecommunication system comprising a group of bonded transmission links including at least a first link and a second link for carrying together a binary traffic stream, wherein each of said bonded transmission links is adapted to carry binary information allocated in a number of bins; the method comprises transmission of the binary traffic stream via the group of bonded transmission links and performing bit re-allocation between different bonded transmission links of said group in case of change of one or more conditions in one or more bins of at least one bonded transmission link in said group.

2. The method according to Claim 1, wherein
- said transmission comprises transmitting a first sub-stream of binary information via the first link, while allocating said first sub-stream in one or more of bins of the first link so that each bit of the first sub-stream is allocated in a specific bin of said first link;
- said bit re-allocation is performed by allocating one or more bits of information, previously allocated in a bin of said first link, into a bin of the second link.

3. The method according to Claim 1 or 2, wherein said conditions comprise one or more conditions selected from at least the following ones: transmission conditions, link conditions, time factor, user instructions.

4. The method according to any one of the preceding claims, further comprising an additional step of allocating information previously located in one bin of the first link, into another bin of the same first link.

5. The method according to any one of the preceding claims, wherein the bonded links are wire-line transmission links adapted to carry the traffic stream according to a Discreet Multi Tone (DMT) technology selected from a list comprising at least DSL, ADSL, ADSL2, ADSL2plus, VDSL1 and VDSL2.

6. The method according to any one of the preceding claims, wherein at least part of bandwidth available on a specific bonded transmission link of the group and being conventionally not in use is considered as reserved and, whenever required, is selectively used for the bit re-allocation in one or another direction of transmission.

7. The method according to any one of the preceding claims, comprising:
preliminarily reserving capacity in at least one link among said bonded transmission links, by at least partially reserving one or more selected bins in said at least one link, and
- in case of degradation of said conditions in one or more other links of said bonded transmission links, using said at least partially reserved bins for performing the bit re-allocation to them from bins of said one or more degraded transmission links.

8. The method according to any one of the preceding claims, comprising utilizing a modified mechanism of On Line Reconfiguration (OLR) for performing the bit re-allocation between different links of the group of bonded transmission links operating according to DMT technology.

9. A system for rate adaptation in a binary traffic stream to be carried via a group of bonded transmission links comprising at least two bonded transmission links, wherein each of said bonded transmission links is adapted to carry binary information in a number of bins; the system being capable of performing bit re-allocation between different links of the group in case of a change of one or more conditions in one or more bins of at least one link in said group of bonded transmission links.

10. A system according to Claim 9, comprising:
one or more monitoring means, wherein each of said monitoring means being capable of monitoring one or more predetermined conditions in a specific link of said bonded transmission links, the one or more monitoring means being in communication with a centralized conditions' monitoring and control unit CMCU capable of:
storing and updating data about bit allocations in the bins of said bonded transmission links;
collecting information from said monitoring means about said predetermined monitored conditions in said transmission links;
determining changes in the monitored conditions based on the collected information,
making decisions about bit re-allocation between different said transmission links based on the determined changes of said conditions and using said data about bit allocations,
controlling bit re-allocation between different said bonded transmission links according to the decision;
the system also comprising a Bandwidth adaptation block BAB for performing said bit re-allocation under control of the CMCU.

11. The system according to Claim 9 or 10, suitable for a DMT technology.

12. The system according to Claim 10 or 11, comprising at least one modified OLR software unit in the CMCU, the OLR unit being capable of receiving and processing information about said conditions in bins of different bonded transmission links, and capable of making decisions of the bit re-allocation between bins of said different transmission links.

13. A software product comprising computer implementable instructions and/or data for carrying out the method according to any one of Claims 1 to 8.

14. A carrier medium comprising the software product according to Claim 13.
